# FASCICULE DE BREVET EUROPEEN

(11) **EP 2 219 889 B1**
(45) Date de publication et mention de la délivrance du brevet: **02.05.2018**
(21) Numéro de dépôt: 08853515.8
(22) Date de dépôt: 12.11.2008
(51) Int. Cl.: B60C 23/04

(54) **PROCEDE ET DISPOSITIF D'IDENTIFICATION DES CAPTEURS LOGES DANS DES PNEUMATIQUES**
VERFAHREN UND VORRICHTUNG ZUR IDENTIFIKATION VON IN REIFEN BEFINDLICHEN SENSOREN
METHOD AND DEVICE FOR IDENTIFYING SENSORS HOUSED IN TYRES

(30) Priorité: 12.11.2007 FR 0758961
(43) Date de publication de la demande: 25.08.2010
(73) Titulaire: LDL Technology, 31520 Ramonville Saint Agne (FR)
(72) Inventeur: LEFAURE, Philippe, 31450 Montbrun Lauragais (FR)
(74) Mandataire: Godard, Xavier
(86) Numéro de dépôt international: PCT/FR2008/052029
(87) Numéro de publication internationale: WO 2009/068808

(56) Documents cités:
- EP-A- 1 270 349
- EP-A- 1 419 908
- EP-A- 1 614 550
- DE-A1-102006 012 534
- US-A1- 2002 130 771
- US-A1- 2004 189 457
- US-A1- 2005 156 723
- US-A1- 2006 012 475
- US-A1- 2006 132 325
- US-A1- 2006 214 780

## Description

### DOMAINE D'APPLICATION DE L'INVENTION

La présente invention a trait au domaine des capteurs logés dans les pneumatiques et notamment aux adaptations permettant dans les meilleures conditions de les différencier et de les situer une fois positionnés.

### DESCRIPTION DE L'ART ANTÉRIEUR

Il est connu de l'art antérieur des capteurs positionnés à l'intérieur des pneumatiques des véhicules afin de mesurer et de transmettre des données quant à la pression ou à la température. Pour ce faire, chaque capteur placé dans chaque pneumatique est classiquement équipé d'un émetteur à radiofréquences à des fins de transmission sans fil desdites données, à un récepteur placé sur l'essieu ou sur le châssis du véhicule. Ce récepteur reçoit et décode les signaux informatifs émis par les émetteurs de chaque roue.

Ce type d'équipement est décrit dans les documents EP 1419908, US 2006/214780, DE 10 2006 012534, US2005/156723 et US2006/0012475, qui montre le préambule de la revendication 1. Dans certains véhicules tels les poids lourds ainsi que les bus, les roues sont montées par paire à chaque extrémité d'essieu : on dit alors que les roues sont jumelées. Pour une telle application, l'exploitation du réseau de capteurs ci-dessus décrit, peut présenter des difficultés qui sont décrites ci-après.

Le jumelage des roues rend très proches les deux capteurs y associés et il est difficile de différencier les émissions de ces deux capteurs aussi bien à l'arrêt que pendant le fonctionnement du véhicule sans mettre en oeuvre des techniques de codage et d'identification particulièrement complexes et onéreuses.

Par exemple, lors de l'apprentissage, c'est à dire lors de la phase de mise au point du système de gestion des informations issues des capteurs à l'arrêt, une activation simultanée des deux capteurs peut être réalisée involontairement lorsqu'ils sont interrogés par l'opérateur au moyen de son module électronique d'interrogation qu'il oriente vers le pneumatique extérieur.

De même, lors d'une phase de fonctionnement en déplacement, la proximité des capteurs des roues d'une même extrémité d'un essieu rend difficile le déchiffrage des messages de par la collision des trames et du fait que le rayonnement électromagnétique émis par les capteurs et reçu par le module de réception est de même puissance ce qui inhibe la capacité à recevoir le message (récepteur rendu aveugle).

### DESCRIPTION DE L'INVENTION

Partant de cet état de fait, la demanderesse a mené des recherches visant à résoudre les difficultés constatées dans l'exploitation d'un système de capteurs pour des véhicules présentant des roues jumelées.

Ces recherches ont abouti à la conception d'un procédé et d'un dispositif d'identification des capteurs logés non seulement dans des roues jumelées mais également dans des roues séparées. Ce procédé et ce dispositif sont très peu coûteux et particulièrement faciles à mettre en oeuvre. Ils ne requièrent pas non plus de modification des technologies existantes de communication.

Selon l'invention, le procédé d'identification des capteurs d'un système d'information pour véhicule du type de ceux associant une pluralité de capteurs logés dans les roues et équipés d'un sous-ensemble d'émission des informations collectées vers un module d'émission et de réception desdites informations collectées équipé d'au moins une antenne de transmission/réception, où chaque extrémité d'essieu est équipé de roues jumelées, une roue intérieure et une roue extérieure, chaque roue accueillant un capteur équipé d'un sous-ensemble d'émission, est remarquable en ce qu'il consiste à faire varier la puissance de l'antenne de transmission de façon à ce que le champ d'émission de l'antenne varie et inclut ou exclut le ou les capteurs disposés dans son rayon d'action afin de localiser la source des données reçues.

Cette caractéristique est particulièrement avantageuse en ce qu'elle permet d'identifier les capteurs sans passer par une technologie de codage. En effet, par déduction, le module d'émission et de réception va recevoir un ou plusieurs trains de données, celui n'étant plus reçu (par diminution de la puissance) ou reçu en sus (par augmentation de la puissance) pouvant être identifié par rapport aux autres.

Ainsi, si le document EP 1419908 constitue une solution à l'identification des capteurs, ce procédé et ce dispositif ne constituent pas une solution dans le cadre d'une application liée à des roues jumelées d'une même extrémité d'essieu. En effet, le décalage que constitue l'écart présent entre deux roues jumelées n'est pas suffisant pour recréer les conditions d'éloignement nécessaires à l'émission à des taux ou à une force différents.

De plus, si les documents US 2006/0214780 et US 2005/0156723 décrivent la possibilité de faire varier la puissance cette variation n'a pas les objectifs de l'invention. Comme expliqué plus haut, le peu de distance séparant matériellement les deux capteurs ne permet pas avec une antenne quelle que soit sa position de ne pas recevoir les deux signaux des deux capteurs.
Ainsi, dans le cadre d'une application à des roues jumelées, il n'est pas possible de disposer dans tous les cas d'une puissance d'antenne adaptée à l'interrogation d'un seul capteur. En effet, la puissance de l'antenne permettant d'interroger le capteur le plus éloigné va obligatoirement activer le capteur le plus proche puisqu'il se trouve à proximité.
Alors que dans l'art antérieur cette double activation constitue le problème technique, elle constitue pour l'invention un des signaux déclencheurs de l'identification recherchée.
En effet, le procédé de l'invention est un procédé d'identification qui va faire varier la puissance de l'antenne assurant l'émission du signal d'interrogation de façon à inclure ou à exclure les capteurs. A partir d'un antenne liée au châssis et augmentant progressivement sa puissance, l'activation d'un premier capteur suivie de l'activation des deux capteurs permet d'identifier ledit premier capteur activé comme celui installé dans la roue intérieure. A contrario, à partir d'une antenne liée au châssis et diminuant progressivement sa puissance l'activation des deux capteurs puis l'activation (et donc la réception du signal) d'un seul capteur permet d'identifier ce seul capteur activé comme celui installé dans la roue intérieure.

Ce procédé peut s'associer à une disposition judicieuse des capteurs. Ainsi selon une caractéristique particulièrement avantageuse, l'antenne est disposée de façon à ce que les capteurs dont elle doit recevoir les données soient positionnés à une distance différente de l'antenne de sorte que la variation du rayonnement même orienté de l'antenne permette d'inclure ou d'exclure les capteurs. En effet, la diminution d'un lobe de rayonnement d'antenne exclut les capteurs les plus éloignés de l'antenne jusqu'à ce que l'antenne ne reçoive qu'un seul signal issu du capteur le plus proche.

Cette technique est exploitée dans le procédé imaginé par la demanderesse en application à des roues jumelées. Ce procédé d'identification des capteurs d'un système d'information pour véhicule du type de celui associant au moins un capteur équipé d'un sous-ensemble d'émission des informations collectées à un module d'émission et de réception desdites informations collectées, ledit module étant associé au châssis du véhicule et équipé d'une antenne, chaque extrémité d'essieu étant équipée de roues jumelées, est remarquable en ce qu'il consiste à faire diminuer la puissance de l'antenne de sorte que lorsque la puissance atteint un niveau suffisamment faible, le capteur le plus proche (capteur intérieur) est alors seul à transmettre et est donc identifié comme capteur de la roue intérieure. La variation de la puissance de l'antenne permet ici de localiser les capteurs de deux roues disposées sur la même extrémité d'essieu et donc à une distance différente du châssis et en conséquence de l'antenne. Cette disposition des roues permet d'exploiter le procédé de l'invention. Le module peut être associé à une antenne par essieu ou une antenne par extrémité d'essieu.

L'invention concerne également un dispositif permettant de mettre en oeuvre le procédé ci-dessus décrit. Ce dispositif est remarquable en ce qu'il est constitué par un circuit électronique associant une antenne à une résistance variable dont la variation permet de faire varier le coefficient de surtension et donc le gain de l'antenne. Le module d'émission et de réception des données collectées par les capteurs intégrés aux roues auquel est associée l'antenne peut être supporté par le châssis du véhicule pour un fonctionnement en déplacement du véhicule. L'antenne dudit module est alors associée au châssis du véhicule. Le module d'émission et de réception peut être constitué par un module d'interrogation électronique fixe à l'intérieur d'une zone de réparation/apprentissage d'un garage oubien présent dans un boîtier portable non associé au châssis utilisé par un opérateur lors de l'arrêt du véhicule. L'antenne est alors associée au boîtier portable.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un procédé et d'un dispositif conformes à l'invention.

### BRÈVE DESCRIPTION DES DESSINS

La figure 1 illustre une application du procédé pour un véhicule à quatre roues,
La figure 2 illustre une application du procédé pour un véhicule présentant des roues jumelées,
La figure 3 illustre un mode de réalisation du dispositif permettant de mettre en oeuvre le procédé.

### DESCRIPTION DES MODES DE RÉALISATION PRÉFÉRÉS

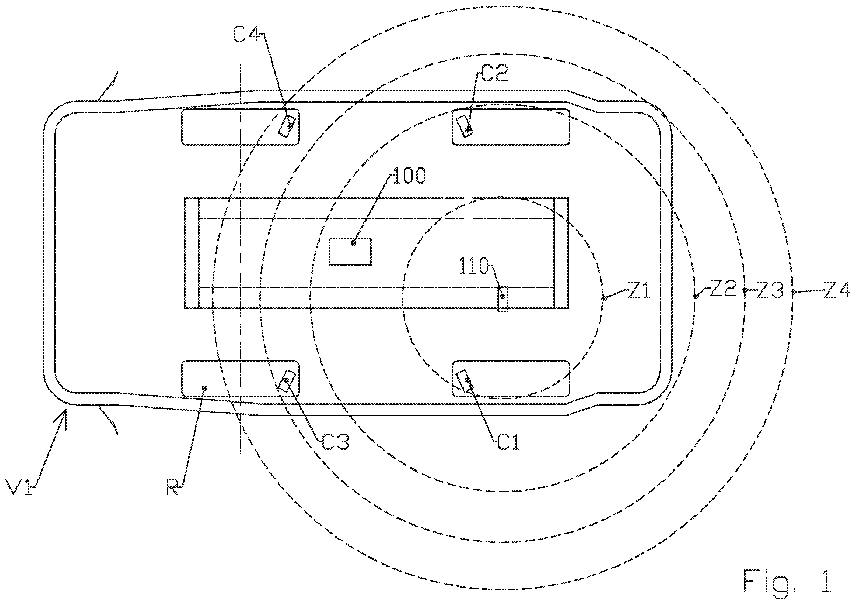

Tel qu'illustré sur le dessin de la figure 1, le véhicule V1 est équipé de quatre roues R dans les pneumatiques de chacune desquelles est disposé un capteur C1, C2, C3 et C4. Le châssis du véhicule V1 est équipé d'un module d'émission et de réception 100 associé à une antenne 110.
Comme illustré, sur la base une antenne isotrope c'est à dire présentant une zone de diffusion équivalente dans toutes les directions, l'antenne 110 est placée sur le véhicule de façon à être à une distance différente des roues R et donc des capteurs C1 et C2, C3 et C4. Conformément à l'invention, la puissance de diffusion de l'antenne va varier de façon à faire évoluer l'envergure de la zone de diffusion pour qu'elle englobe plus ou moins de capteurs.
Ainsi, comme illustrée, une première zone de diffusion Z1 permet d'activer et de recevoir les données issues du capteur C1 qui est le plus proche de l'antenne. Par augmentation progressive de la puissance et donc du gain, l'antenne va activer et recevoir successivement les données issues des capteurs de plus en plus éloignés. Comme illustrée, une deuxième zone de diffusion Z2 intègre le capteur C2, puis une troisième zone de diffusion Z3 intègre le capteur C3 et une quatrième zone de diffusion Z4 intègre le capteur C4. A chaque variation, la présence d'un signal ou d'un train supplémentaire de données permet de l'identifier comme issu d'un capteur plus éloigné que le train de données précédent. L'antenne 110 étant disposée de sorte que les capteurs soient disposés à une distance différente de l'antenne dont la puissance varie, il est alors possible d'identifier chaque train de données en localisant chaque capteur.

Ce procédé reste le même en faisant diminuer la puissance.

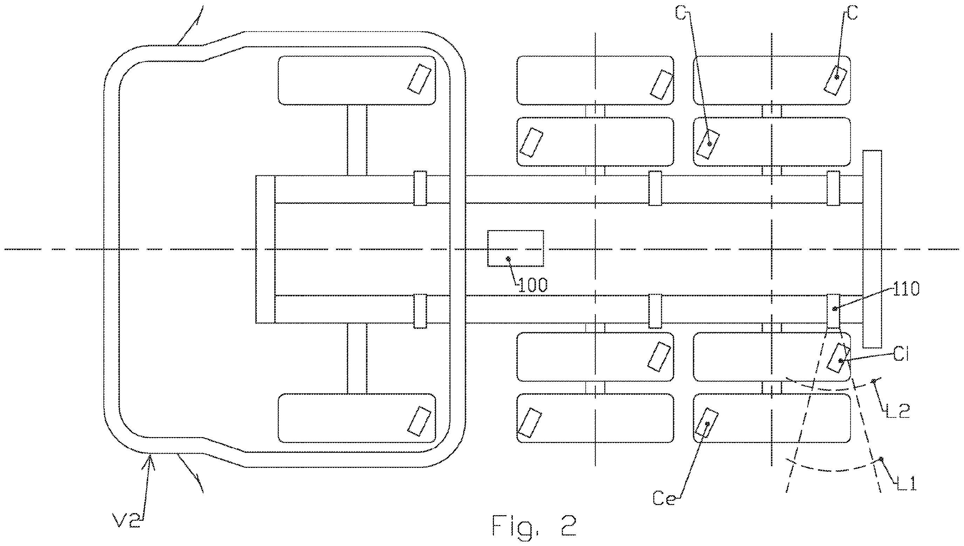

L'autre application du procédé de l'invention illustré par le dessin de la figure 2, concerne les roues jumelées. Le véhicule V2 est équipé d'un système de prise d'information associant dans chaque roue R, un capteur équipé d'un sous-ensemble d'émission des informations collectées à un module d'émission et de réception desdites informations collectées 100, ledit module étant associé au châssis du véhicule V2 et équipé d'une pluralité d'antennes 110 de transmission disposées sur le châssis à proximité de chaque extrémité d'essieu. En effet, dans cette application comme expliqué dans la description de l'art antérieur, il est difficile pour le module d'émission et de réception de différencier les données issus du capteur Ci placé dans la roue intérieure de celles du capteur Ce placé dans la roue extérieure même lorsque le lobe de rayonnement de l'antenne d'émission du signal d'interrogation 110 est limité. Aussi, conformément au procédé de l'invention, le gain de l'antenne 110 va faire l'objet d'une diminution pour passer d'une envergure de rayonnement où le lobe de diffusion L1 englobe les deux capteurs Ci et Ce jusqu'à une envergure de rayonnement où le lobe de diffusion L2 n'englobe qu'un seul capteur Ci. Le module d'émission et de réception peut alors déduire l'origine des données qu'il reçoit de cette antenne. Selon un mode de réalisation non illustré, le dispositif comprend une seule antenne pour chaque essieu supportant des roues jumelées.

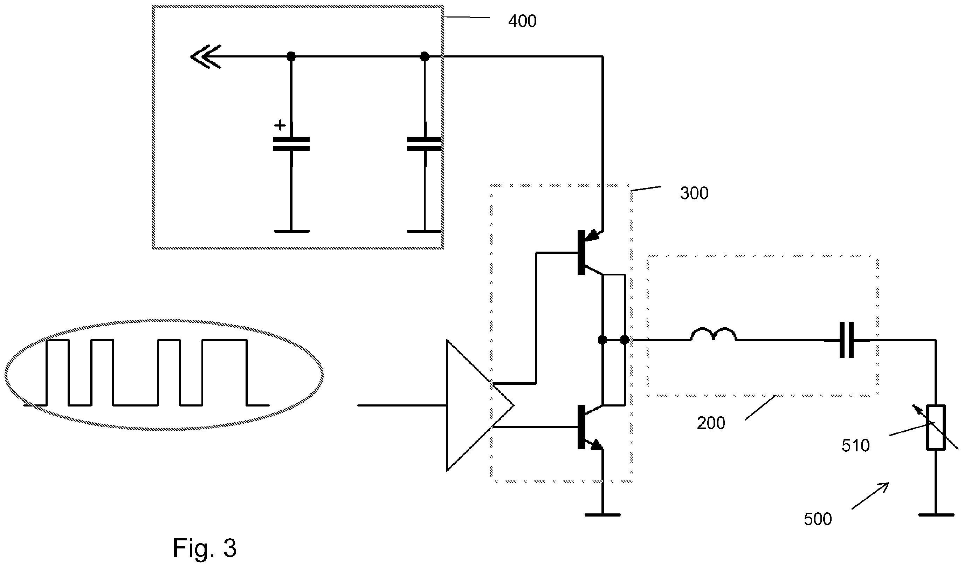

La figure 3 illustre un mode de réalisation d'un montage électronique permettant de faire varier la puissance de l'antenne qui est de type basse fréquence.

Cette antenne 200 est liée à un étage d'amplification des données 300, un étage d'alimentation et de filtrage 400 et un étage de variation de puissance 500. Conformément à l'invention, cet étage de variation de puissance est constitué par une résistance variable 510 dont la variation commandée va permettre de diminuer ou d'augmenter le champ de rayonnement de l'antenne 200.

Selon le mode de réalisation illustré, l'étage d'alimentation et de filtrage comprend un condensateur polarisé et un condensateur. L'étage d'amplification comprend un transistor PNP et un transistor NPN.

## Revendications

1. Procédé d'identification des capteurs (C1, C2, C3, C4) d'un système d'information pour véhicule (V1) du type de ceux associant une pluralité de capteurs logés dans les roues et équipés d'un sous-ensemble d'émission des informations collectées vers un module d'émission et de réception (100) desdites informations collectées équipé d'au moins une d'antenne (110) de transmission/réception, où chaque extrémité d'essieu est équipé de roues jumelées, une roue intérieure et une roue extérieure, chaque roue accueillant un capteur équipé (Ci ou Ce) d'un sous-ensemble d'émission, **CARACTÉRISÉ EN CE QU'**il consiste à faire varier la puissance de l'antenne de transmission (110) de façon à ce que le champ d'émission de l'antenne varie et inclut ou exclut le ou les capteurs (Ci ou Ce) disposés dans son rayon d'action de sorte que par déduction, le module d'émission et de réception va recevoir un ou plusieurs trains de données, celui n'étant plus reçu (par diminution de la puissance) ou reçu en sus (par augmentation de la puissance) pouvant être identifié par rapport aux autres.

2. Procédé selon la revendication 1, **CARACTÉRISÉ EN CE QU'**il consiste à disposer l'antenne (110) de façon à ce que les capteurs (C1, C2, C3, C4) dont elle doit recevoir les données soient positionnés à une distance différente de l'antenne (110).

3. Procédé selon la revendication 1 du type de celui qu'à chaque extrémité d'essieu est équipé de roues jumelées, une roue intérieure et une roue extérieure, chaque roue accueillant un capteur équipé (Ci ou Ce) d'un sous-ensemble d'émission, **CARACTÉRISÉ EN CE QU'**il consiste à faire diminuer la puissance de l'antenne (110) de sorte que lorsque la puissance atteint un niveau suffisamment faible, le capteur (Ci) le plus proche est seul à transmettre et est identifié comme capteur de la roue intérieure.

4. Dispositif permettant de mettre en oeuvre le procédé d'identification des capteurs (C1, C2, C3, C4) d'un système d'information pour véhicule (V1) du type de ceux associant une pluralité de capteurs logés dans les roues et équipés d'un sous-ensemble d'émission des informations collectées vers un module d'émission et de réception (100) desdites informations collectées équipé d'au moins une d'antenne (110) de transmission/réception, où chaque extrémité d'essieu est équipé de roues jumelées, une roue intérieure et une roue extérieure, chaque roue accueillant un capteur équipé (Ci ou Ce) d'un sous-ensemble d'émission, selon la revendication 1, **CARACTÉRISÉ PAR LE FAIT QU'**il est constitué par un circuit électronique associant une antenne (200) à une résistance variable (510) dont la variation assure la variation du coefficient de surtension de l'antenne (200).

5. Dispositif permettant de mettre en oeuvre le procédé selon la revendication 1, **CARACTÉRISÉ PAR LE FAIT QUE** ladite antenne (110) est associée au châssis du véhicule (V1 ou V2).

6. Dispositif permettant de mettre en oeuvre le procédé selon la revendication 1, **CARACTÉRISÉ PAR LE FAIT QUE** l'antenne (110) est associée au boîtier portable d'un module d'émission et de réception non associé au châssis .

7. Dispositif selon la revendication 5, **CARACTÉRISÉ PAR LE FAIT QU'**il comprend une pluralité d'antennes (110) disposées sur le châssis à proximité de chaque extrémité d'essieu supportant des roues jumelées.

8. Dispositif selon la revendication 5, **CARACTÉRISÉ PAR LE FAIT QU'**il comprend une seule antenne (110) pour chaque essieu supportant des roues jumelées.

## Patentansprüche

1. Verfahren zur Identifikation der Sensoren (C1, C2, C3, C4) eines Informationssystems für ein Fahrzeug (V1) von der Art, die mehrere Sensoren verbinden, die in den Rädern untergebracht sind und mit einer Unterbaugruppe zum Senden der gesammelten Informationen an ein Sende- und Empfangsmodul (100) der gesammelten Informationen ausgestattet sind, die mit mindestens einer Sende-/Empfangsantenne (110) ausgestattet ist, wo jedes Achsenendstück mit Zwillingsrädern, einem inneren Rad und einem äußeren Rad, ausgestattet ist, wobei jedes Rad einen Sensor (Ci oder Ce) aufnimmt, der mit einer Unterbaugruppe zum Senden ausgestattet ist, **DADURCH GEKENNZEICHNET, DASS** es darin besteht, die Leistung der Sendeantenne (110) derart zu variieren, dass das Sendefeld der Antenne variiert und den oder die Sensoren (Ci oder Ce), die in seiner Reichweite angeordnet sind, derart einschließt oder ausschließt, dass das Sende- und Empfangsmodul durch Deduktion einen oder mehrere Datenströme empfängt, wobei diese, wenn sie (durch Verringerung der Leistung) nicht mehr empfangen werden oder (durch Erhöhung der Leistung) zusätzlich empfangen werden, im Verhältnis zu den anderen identifiziert werden können.

2. Verfahren nach Anspruch 1, **DADURCH GEKENNZEICHNET, DASS** es darin besteht, die Antenne (110) derart anzuordnen, dass die Sensoren (C1, C2, C3, C4), von denen sie die Daten empfangen soll, in einem unterschiedlichen Abstand von der Antenne (110) angeordnet werden.

3. Verfahren nach Anspruch 1 von der Art, die an jedem Achsenendstück mit Zwillingsrädern, einem inneren Rad und einem äußeren Rad, ausgestattet ist, wobei jedes Rad einen Sensor (Ci oder Ce) einer Unterbaugruppe zum Senden aufnimmt, **DADURCH GEKENNZEICHNET, DASS** es darin besteht, die Leistung der Antenne (110) derart zu verringern, dass, wenn die Leistung ein ausreichend niedriges Niveau erreicht, der Sensor (Ci), der am nächsten ist, der einzige ist, der sendet, und als der Sensor des inneren Rades identifiziert wird.

4. Vorrichtung, die ermöglicht, das Verfahren zur Identifikation der Sensoren (C1, C2, C3, C4) eines Informationssystems für ein Fahrzeug (V1) von der Art, die mehrere Sensoren verbinden, die in den Rädern untergebracht sind und mit einer Unterbaugruppe zum Senden der gesammelten Informationen an ein Sende- und Empfangsmodul (100) der gesammelten Informationen ausgestattet sind, die mit mindestens einer Sende-/Empfangsantenne (110) ausgestattet ist, wo jedes Achsenendstück mit Zwillingsrädern, einem inneren Rad und einem äußeren Rad, ausgestattet ist, wobei jedes Rad einen Sensor (Ci oder Ce) aufnimmt, der mit einer Unterbaugruppe zum Senden nach Anspruch 1 ausgestattet ist, **DADURCH GEKENNZEICHNET, DASS** SIE aus einer elektronischen Schaltung gebildet ist, die eine Antenne (200) mit einem veränderlichen Widerstand (510) verbindet, dessen Variation die Variation des Überspannungskoeffizienten der Antenne (200) gewährleistet.

5. Vorrichtung, die ermöglicht, das Verfahren nach Anspruch 1 umzusetzen, **DADURCH GEKENNZEICHNET, DASS** die Antenne (110) mit dem Fahrgestell des Fahrzeugs (V1 oder V2) verbunden ist.

6. Vorrichtung, die ermöglicht, das Verfahren nach Anspruch 1 umzusetzen, **DADURCH GEKENNZEICHNET, DASS** die Antenne (110) mit dem tragbaren Gehäuse eines Sende- und Empfangsmoduls verbunden ist, das nicht mit dem Fahrgestell verbunden ist.

7. Vorrichtung nach Anspruch 5, **DADURCH GEKENNZEICHNET, DASS** sie mehrere Antennen (110) aufweist, die auf dem Fahrgestell in der Nähe von jedem Achsenendstück angeordnet sind, das Zwillingsräder trägt.

8. Vorrichtung nach Anspruch 5, **DADURCH GEKENNZEICHNET, DASS** sie eine einzige Antenne (110) für jede Achse aufweist, die Zwillingsräder trägt.

## Claims

1. Method of identifying sensors (C1, C2, C3, C4) of an information system for vehicle (V1) of the type of those associating a plurality of sensors housed in the wheels and provided with a subassembly for transmitting the collected information towards a module for transmitting and receiving (100) said collected information provided with at least one transmission/reception antenna (110), wherein each axle end is provided with twin wheels, an inner wheel and an outer wheel, each wheel accommodating a sensor provided (Ci or Ce) with a subassembly for transmitting, **CHARACTERISED IN THAT** it comprises varying the power of the transmission antenna (110) in such a way that the transmission field of the antenna varies and includes or excludes the sensor(s) (Ci or Ce) arranged in its radius of action in such a way that through deduction, the module for transmitting and receiving will receive one or several streams of data, with the one no longer being received (via a decrease in power) or received in addition (via an increase in power) able to be identified in relation to the others.

2. Method according to claim 1, **CHARACTERISED IN THAT** it comprises arranging the antenna (110) in such a way that the sensors (C1, C2, C3, C4) of which it must receive the data are positioned at a different distance from the antenna (110).

3. Method according to claim 1 of the type of that at each axle end is provided with twin wheels, an inner wheel and an outer wheel, each wheel accommodating a sensor provided (Ci or Ce) with a subassembly for transmitting, **CHARACTERISED IN THAT** it comprises decreasing the power of the antenna (110) in such a way that when the power reaches a level sufficiently low, the nearest sensor (Ci) is the only one to transmit and is identified as the sensor of the inner wheel.

4. Device making it possible to implement the method of identifying sensors (C1, C2, C3, C4) of an information system for vehicle (V1) of the type of those associating a plurality of sensors housed in the wheels and provided with a subassembly for transmitting the collected information towards a module for transmitting and receiving (100) said collected information provided with at least one transmission/reception antenna (110), wherein each axle end is provided with twin wheels, an inner wheel and an outer wheel, each wheel accommodating a sensor provided (Ci or Ce) with a subassembly for transmitting, according to claim 1, **CHARACTERISED BY** THE FACT THAT it is comprised of an electronic circuit associating an antenna (200) with a variable resistor (510) of which the variation provides the variation of the Q-factor of the antenna (200).

5. Device making it possible to implement the method according to claim 1, **CHARACTERISED BY** THE FACT THAT said antenna (110) is associated to the frame of the vehicle (V1 or V2).

6. Device making it possible to implement the method according to claim 1, **CHARACTERISED BY** THE FACT THAT the antenna (110) is associated to the portable case of a module for transmitting and receiving that is not associated to the frame.

7. Device according to claim 5, **CHARACTERISED BY** THE FACT THAT it comprises a plurality of antennas (110) arranged on the frame in the vicinity of each axle end supporting twin wheels.

8. Device according to claim 5, **CHARACTERISED BY** THE FACT THAT it comprises a single antenna (110) for each axle supporting twin wheels.
